# FASCICULE DE BREVET EUROPEEN

(11) **EP 2 943 693 B1**
(45) Date de publication et mention de la délivrance du brevet: **09.05.2018**
(21) Numéro de dépôt: 13808126.0
(22) Date de dépôt: 28.11.2013
(51) Int. Cl.: F16B 21/07

(54) **AGRAFE DE FIXATION D'UN PANNEAU SUR UN SUPPORT ET ASSEMBLAGE OBTENU**
KLEMME ZUR BEFESTIGUNG EINER PLATTE AN EINEM HALTER UND AUF DIESE WEISE HERGESTELLTE ANORDNUNG
CLAMP FOR FASTENING A PANEL TO A HOLDER AND RESULTING ASSEMBLY

(30) Priorité: 10.01.2013 FR 1350204
(43) Date de publication de la demande: 18.11.2015
(73) Titulaire: A. Raymond et Cie, 38000 Grenoble (FR)
(72) Inventeur: CAMUS, Pascal, 38410 Chamrousse (FR)
(74) Mandataire: Prugneau, Philippe
(86) Numéro de dépôt international: PCT/FR2013/052893
(87) Numéro de publication internationale: WO 2014/108608

(56) Documents cités:
- EP-A1- 1 074 751
- EP-A2- 2 175 146
- FR-A1- 2 796 999
- FR-A1- 2 938 886
- JP-A- 2009 197 900
- US-A1- 2012 131 771

## Description

### Domaine technique

L'invention concerne de façon générale une agrafe de fixation, par exemple d'un panneau sur un support.

### Technique antérieure

Ce type d'agrafes de fixation est particulièrement utilisé dans l'industrie automobile pour fixer des panneaux de revêtement décoratif sur la structure intérieure de véhicule. Ces agrafes de fixation peuvent également être utilisées dans tout autre domaine technique pour fixer des panneaux ou tout autre élément sur un support.

La publication EP 2 175 146 décrit une telle agrafe de fixation d'un panneau comportant une jambe d'ancrage pourvue d'un orifice, sur un support pourvu d'un orifice. L'agrafe de fixation comporte une tête présentant une forme de O de laquelle s'étend un corps creux en forme de U entre les branches duquel sont prévues une première aile élastiquement déformable disposée d'un premier coté de l'ouverture du U et deux secondes ailes élastiquement déformables disposées d'un second coté de l'ouverture du U. Les première et secondes ailes relient la base du U à la tête de l'agrafe de fixation. La première aile est pourvue d'un crochet intérieur destiné à se loger dans l'orifice de la jambe d'ancrage insérée dans le U et à bloquer le panneau sur l'agrafe de fixation. Lors de cette insertion de la jambe d'ancrage dans le corps creux, la première aile est élastiquement déformée vers l'extérieur du corps creux avant de se détendre vers l'intérieur pour se loger dans l'orifice et bloquer la jambe d'ancrage dans l'agrafe. Les première et secondes ailes sont pourvues chacune d'un crochet extérieur destiné à venir en appui sous le support, en périphérie de l'orifice dans laquelle le corps est inséré. Lors de cette insertion de l'agrafe de fixation dans l'orifice du support, les première et seconde ailes sont élastiquement déformées vers l'intérieur du corps avant de se détendre vers l'extérieur pour bloquer le support entre la tête et les crochets extérieurs.

La publication US2012/13177 décrit aussi une agrafe de fixation.

### Exposé de l'invention

Le but de l'invention est de proposer une alternative d'agrafe de fixation facile à mettre en place avec des efforts d'assemblage modérés et permettant d'assurer une fixation efficace.

A cet effet, l'invention a pour objet une agrafe de fixation comportant une tête prolongée par un corps creux destiné à être logé dans un orifice d'un support et à recevoir une jambe d'ancrage d'un panneau à fixer au support, le corps comportant des première et seconde ailes élastiquement déformables, le corps présente une forme de U dont les branches s'étendent de part et d'autre d'un plan médian, les branches comportant des évidements logeant les première et seconde ailes aptes à être déformées en retrait du contour externe des branches vers l'intérieur du U, chaque première et seconde aile est pourvue d'au moins un premier crochet intérieur proéminent à l'intérieur du U et destiné à bloquer la jambe d'ancrage quand elle est insérée dans le U et un crochet extérieur proéminent à l'extérieur du U et destiné à bloquer le support entre le crochet extérieur et la tête, caractérisée en ce que les crochets intérieurs agencés sur chacune des ailes sont décalés l'un de l'autre dans le plan médian du U et agencés pour, au repos, se chevaucher et traverser chacun le plan médian.

L'idée à la base de l'invention est de concentrer, sur les première et seconde ailes, les fonctions de fixation, d'une part du panneau sur l'agrafe de fixation et d'autre part de l'agrafe de fixation sur le support. L'idée à la base de l'invention est également de permettre aux ailes d'être en retrait par rapport aux branches qui peuvent ainsi pleinement servir au guidage lors de l'assemblage sans être affectées par la fonction fixation remplie par les ailes.

Le dispositif selon l'invention peut avantageusement présenter les particularités suivante :
- chaque première, seconde aile est pourvue d'une première extrémité solidaire de la base du U et d'une seconde extrémité librement flexible orientée vers la tête. Ainsi, les ailes peuvent fléchir librement ce qui facilite l'insertion du panneau dans l'agrafe de fixation et de l'agrafe de fixation dans le support ;
- la première aile est pourvue d'un renfoncement orienté vers la seconde aile, la seconde aile est pourvue d'un renfoncement orienté vers la première aile et chaque renfoncement est prévu en regard respectivement du premier crochet intérieur de l'autre aile, pour recevoir le premier crochet intérieur de l'autre aile lorsque les première et seconde ailes sont déformées élastiquement l'une vers l'autre ;
- la seconde aile comporte un second crochet intérieur, le premier crochet intérieur de la première aile est disposé en regard de l'intervalle séparant les premier et second crochets intérieurs de la seconde aile lorsque les première et seconde ailes sont fléchies en étant éloignées du plan médian, et le premier crochet intérieur de la première aile au repos se trouve dans l'intervalle séparant les premier et second crochets intérieurs de la seconde aile;
- les crochets extérieurs sont reliés à la première, seconde aile qui les portent par des surfaces de glissement extérieures inclinées de sorte à converger l'une vers l'autre en se rapprochant de la base du U, et les premiers crochets intérieurs sont reliés à la première, seconde aile qui les porte par des surfaces de glissement intérieures inclinées de sorte à converger l'une vers l'autre en se rapprochant de la base du U ;
- la tête est formée par deux rebords, disjoints l'un de l'autre, s'étendant de part et d'autre des extrémités des branches du U, chaque rebord étant évidé en forme de C ;
- chaque premier crochet intérieur définit un épaulement orienté vers la base du U et formant avec le plan médian A du U, du coté de la base du U, un angle α supérieur à 90°.
- la base du U est formée par deux traverses séparées l'une de l'autre par un orifice de flexion favorisant la flexion relative des branches.

L'invention porte également sur un assemblage comprenant un panneau pourvu d'une jambe d'ancrage et un support pourvu d'un orifice assemblés au moyen d'une agrafe de fixation telle que décrite, les branches du U étant en contact avec les bords de l'orifice pour caler latéralement l'agrafe de fixation dans l'orifice, la jambe d'ancrage étant bloquée dans l'agrafe de fixation par l'action simultanée des crochets intérieurs et l'agrafe de fixation étant bloquée dans l'orifice par l'action simultanée des crochets extérieurs.

Dans la suite les termes "inférieur" et "supérieur" sont utilisés de manière non limitative. Il va de soit que la réalité physique de ces termes dépend de l'orientation de la forme en U du corps de l'agrafe de fixation. Pour les besoins de la description, la forme en U est supposée orientée avec son ouverture vers le haut telle que représentée sur les figures. La forme en U peut bien entendu être considérée orientée avec son ouverture vers le bas, les termes "inférieur" et "supérieur" utilisés dans la description étant alors à inverser.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- les figures 1 et 2 sont des vues en perspective de l'agrafe de fixation selon l'invention ;
- la figure 3 est une section selon le plan transversal B de la figure 1 de l'agrafe de fixation selon l'invention sur laquelle les deux crochets sont représentés ;
- les figures 4 et 5 sont des vues en perspective coupées, respectivement du panneau avec sa jambe d'ancrage et du support avec son orifice, destinés à être fixés au moyen de l'agrafe de fixation selon l'invention ;
- les figures 6 à 9 sont des vues de coté avec coupe partielle illustrant les étapes d'assemblage du panneau, de l'agrafe de fixation et du support pour obtenir l'assemblage selon l'invention.

### Description d'un mode de réalisation

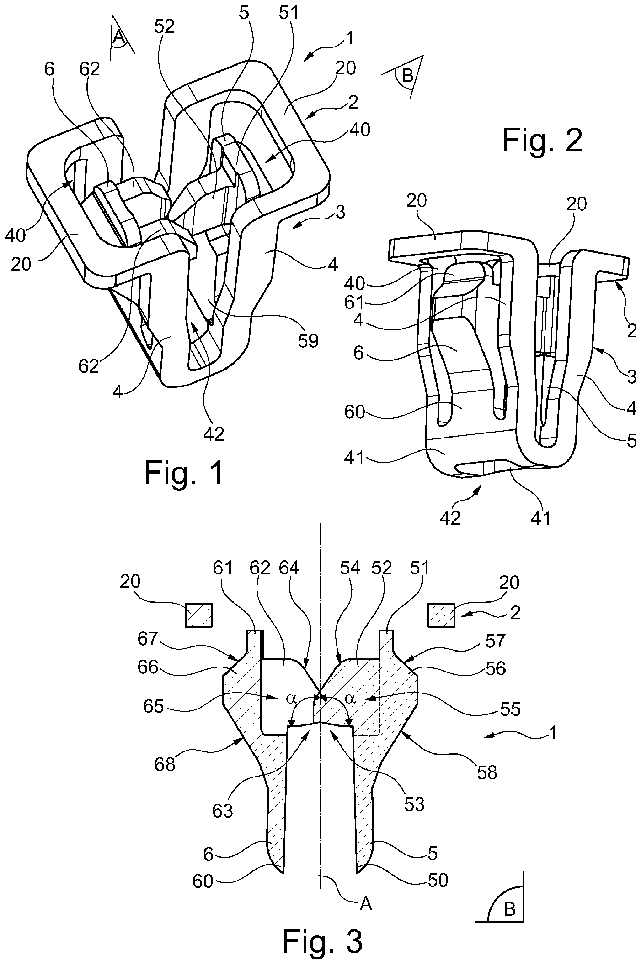

En référence à la figure 1, l'agrafe de fixation 1 selon l'invention comporte une tête 2 prolongée par un corps 3 creux. Le corps 3 présente une forme de U ouvert latéralement selon son plan médian A. De part et d'autre du plan médian A, les branches 4 du U sont pourvues chacune d'un évidement 40. Le corps 3 présente ainsi une forme en double U. Les extrémités inférieures des branches 4 de ces deux U sont solidarisées entre elles au niveau de la base du U par deux traverses 41, visibles sur la figure 2, rectilignes et séparées l'une de l'autre par un orifice de flexion 42 aligné avec le plan médian A. Cet orifice de flexion 42 permet de conférer une certaine flexibilité entre les branches 4. Ainsi, lors de l'assemblage, l'écartement entre les branches 4 peut être ajusté par flexion. Chaque extrémité supérieure d'une branche 4 d'un U est solidarisée à l'extrémité supérieure de la branche 4 correspondante de l'autre U par un rebord 20 en forme de C s'étendant perpendiculairement au plan médian A et dont le creux est orienté vers le plan médian A. Les rebords 20 sont disjoints l'un de l'autre et définissent la tête 2 de l'agrafe de fixation 1.

L'agrafe de fixation 1 comporte en outre une première et une seconde aile 5, 6 disposées chacune dans un des évidements 40. Les premières et secondes ailes 5, 6 s'étendent sensiblement parallèlement aux branches 4 du U. Les premières et secondes ailes 5, 6 sont élastiquement déformables de sorte à pouvoir s'éloigner l'une de l'autre de part et d'autre du plan médian A, et se rapprocher l'une de l'autre vers le plan médian A. La première extrémité 50, 60 (inférieure) de chaque première et seconde aile 5, 6 est solidaire de la traverse 41 correspondante de la base du U. La seconde extrémité 51, 61 (supérieure) est libre, c'est-à-dire indépendante et librement flexible par rapport au reste du corps 3. Ainsi, les première et seconde ailes 5, 6 peuvent facilement fléchir.

La première aile 5 est pourvue d'un crochet intérieur 52 comportant un épaulement intérieur 53 dépassant de la paroi intérieure du U. Au repos (sans flexion de la première aile 5), ce crochet intérieur 52 traverse le plan médian A et l'épaulement intérieur 53 forme avec le plan médian du U, du coté de la base du U, un angle α, visible sur la figure 3, supérieur à 90°. La seconde aile 6 est pourvue de deux crochets intérieurs 62 comportant chacun un épaulement intérieur 63 dépassant de la paroi intérieure du U. Au repos (sans flexion de la seconde aile 6), ces crochets intérieurs 62 traversent le plan médian A et les épaulements intérieurs 53 forment avec le plan médian du U, du coté de la base du U, un angle α, visible sur la figure 3, supérieur à 90°. Ainsi, comme détaillé sur la figue 3, au repos, les crochets intérieurs 52, 62 se chevauchent. Les crochets intérieurs 52, 62 sont disposés de sorte que, au repos, le crochet intérieur 52 de la première aile 5 se trouve dans l'intervalle séparant les deux crochets intérieurs 62 de la seconde aile 6. Lorsque les première et seconde ailes 5, 6 sont fléchies en étant éloignées du plan médian A, le crochet intérieur 52 de la première aile 5 se trouve en regard de l'intervalle séparant les deux crochets intérieurs 62 de la seconde aile 6. Cette disposition en quinconce permet de garantir la stabilité de la fixation. Les épaulements intérieurs 53, 63 sont reliés respectivement à la première, seconde aile 5, 6 qui les portent par des surfaces de glissement intérieures 54, 64 inclinées de sorte à converger l'une vers l'autre en se rapprochant de la base du U.

Chaque première et seconde aile 5, 6 est de plus pourvue d'un renfoncement 55, 65 orienté respectivement vers la seconde, première aile 6, 5. Le renfoncement 55 de la première aile 5 est prévu en regard des crochets intérieurs 62 de la seconde aile 6. Le renfoncement 65 de la seconde aile 6 est prévu en regard du crochet intérieur 52 de la première aile 5. Ainsi, lorsque les premières et secondes ailes 5, 6 sont déformées élastiquement l'une vers l'autre, chaque renfoncement 55, 65 est apte à recevoir le crochet intérieur 62, 52 correspondant.

Enfin, chaque première et seconde aile 5, 6 est de plus pourvue d'un crochet extérieur 56, 66 comportant un épaulement extérieur 57, 67 dépassant de la paroi extérieure du U. Les épaulements extérieurs 57, 67 peuvent être prévus en regard l'un de l'autre, de part et d'autre du plan médian A. Les épaulements extérieurs 57, 67 sont reliés à la première, seconde aile 5, 6 qui les portent par des surfaces de glissement extérieures 58, 68 inclinées de sorte à converger l'une vers l'autre en se rapprochant de la base du U.

Pour obtenir l'assemblage selon l'invention, on utilise une agrafe de fixation 1 et un panneau 7 et un support 8 tels que décrits ci-après.

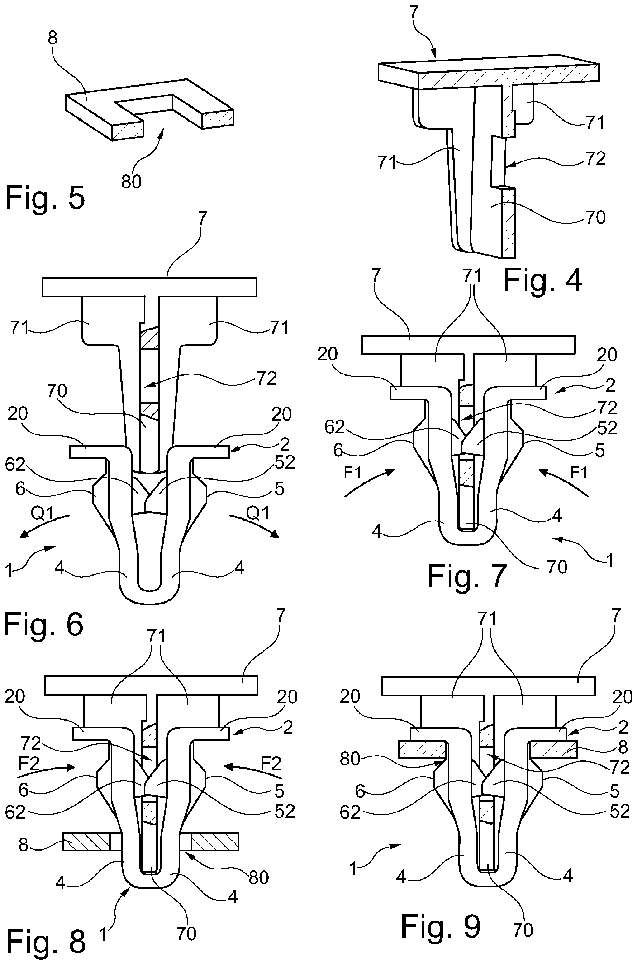

En référence à la figure 4, le panneau 7 est par exemple sensiblement plan et pourvu d'une jambe d'ancrage 70 sensiblement plane s'étendant perpendiculairement du panneau 7. La jambe d'ancrage 70 est reliée au panneau 7 par des nervures 71 permettant de renforcer sa rigidité. La jambe d'ancrage 70 est par ailleurs traversée par une lumière 72.

En référence à la figure 5, le support 8 est pourvu d'un orifice traversant 80, par exemple de forme rectangulaire. On choisi de préférence un orifice traversant 80 de largeur légèrement inférieur à la largeur du corps 3 de l'agrafe de fixation 1.

L'assemblage est obtenu en procédant comme décrit ci-après.

Dans un premier temps, en référence à la figure 6, on solidaire le panneau 7 à l'agrafe de fixation 1. Pour ce faire, on insère par translation la jambe d'ancrage 70 dans la fente du U de l'agrafe de fixation 1. Lors de cette insertion, l'extrémité libre de la jambe d'ancrage 70 force sur les surfaces de glissement intérieures 54, 64 des première et seconde ailes 5, 6. L'inclinaison des surfaces de glissement intérieures 54, 64 favorise l'écartement des première et seconde ailes 5, 6 l'une de l'autre, selon la direction d'ouverture illustrée par les flèches O1. Les première et seconde ailes 5, 6 fléchissent suffisamment pour que leur écartement relatif autoriser le passage de la jambe d'ancrage 70 entre les crochets intérieurs 52, 62, jusqu'à ce que ces crochets intérieurs 52, 62 soient en regard de la lumière 72 de la jambe d'ancrage 70.

En référence à la figure 7, lorsque les crochets intérieurs 52, 62 sont en regard de la lumière 72, les première et seconde ailes 5, 6 se détendent et se rapprochent l'une de l'autre selon la direction de fermeture illustrée par les flèches F1. Les crochets intérieurs 52, 62 se logent alors dans la lumière 72 qu'ils traversent. Le chevauchement des crochets intérieurs 52, 62 permet de consolider la fixation entre la jambe d'ancrage 70 et l'agrafe de fixation 1.

Dans un second temps, en référence à la figure 8, on solidarise l'ensemble obtenu entre le panneau 7 et l'agrafe de fixation 1 au support 8. Pour ce faire, on insère par translation l'agrafe de fixation 1 portant le panneau 7 dans l'orifice 80 du support 8. Lors de cette insertion, la périphérie de l'orifice 80 force sur les surfaces de glissement extérieures 58, 68 des première et seconde ailes 5, 6. L'inclinaison des surfaces de glissement extérieures 58, 68 favorise le rapprochement des première et seconde ailes 5, 6 l'une de l'autre, selon la direction de fermeture illustrée par les flèches F2. Les première et seconde ailes 5, 6 restent fléchies, rapprochées l'une de l'autre de sorte à autoriser le passage des crochets extérieurs 56, 66 au-delà de l'orifice 80. Ainsi, lors de cette insertion, les première et seconde ailes sont au plus affleurantes du contour extérieur du U, permettant aux branches d'être en contact avec l'orifice 80. Ainsi, lors de cette insertion, l'orifice 80 étant moins large que le corps 3 de l'agrafe de fixation 1, les branches 4 en contact avec la périphérie de l'orifice 80 sont légèrement déformées l'une vers l'autre. Les branches 4 assurent ainsi un guidage précis de l'agrafe de fixation 1 lors de son assemblage avec le support 8.

En référence à la figure 9, lorsque les crochets extérieurs 56, 66 sont au-delà de l'orifice 80, les première et seconde ailes 5, 6 se détendent et s'éloignent l'une de l'autre selon la direction d'ouverture illustrée par les flèches 02. La tête 2 de l'agrafe de fixation 1 est en appui sur le dessus du support 8 autour de l'orifice 80, et les crochets extérieurs 56, 66 sont en appui sous le support 8 autour de l'orifice 80, à l'opposé de la tête 2. L'assemblage est ainsi terminé entre le panneau 7, le support 8 et l'agrafe de fixation 1.

Le panneau 8, le support 8 et l'agrafe de fixation 1 peuvent être désolidarisées les uns des autres en réalisant les étapes inverses.

L'invention permet d'atteindre les objectifs précédemment mentionnés. En effet, les première et seconde ailes 5, 6 sont facilement déformables lors de l'introduction de la jambe d'ancrage 70 dans l'agrafe de fixation 1 et lors de l'introduction de l'agrafe de fixation 1 dans le support 8. L'assemblage est ainsi obtenu au moyen d'efforts modérés. De plus, le chevauchement des crochets intérieurs 52, 62 fiabilise la tenue de l'assemblage.

Par ailleurs le faite que chaque première et seconde aile 5, 6 comporte à la fois un crochet extérieur 56, 66 et un ou plusieurs crochets intérieurs 52, 62 permet de fiabiliser la fixation.

De plus, les branches 4 du corps 3 étant exemptes de crochet intérieur et extérieur, elles peuvent, lors de l'assemblage, assurer un guidage fiable de l'agrafe de fixation 1 dans l'orifice 80. Les fonctions de fixation sont remplies par les crochets extérieurs 56, 66 et intérieurs 52, 62 portés par les ailes de fixation 5, 6 qui remplissent ainsi la double fonction de fixation avec le panneau 7 et avec le support 8. Ainsi, les branches 4 qui ne subissent que de très faibles déformations peuvent pleinement assurer leur rôle de guidage.

Il va de soi que la présente invention ne saurait être limitée à la description qui précède d'un de ses modes de réalisation, susceptible de subir quelque modification sans pour autant sortir du cadre de l'invention.

## Revendications

1. Agrafe de fixation (1) comportant une tête (2) prolongée par un corps (3) creux destiné à être logé dans un orifice (80) d'un support (8) et à recevoir une jambe d'ancrage (70) d'un panneau (7) à fixer audit support (8), ledit corps (3) comportant des première et seconde ailes (5, 6) élastiquement déformables, ledit corps (3) présente une forme de U dont les branches (4) s'étendent de part et d'autre d'un plan médian (A), lesdites branches (4) comportant des évidements (40) logeant lesdites première et seconde ailes (5, 6) aptes à être déformées en retrait du contour externe desdites branches (4) vers l'intérieur dudit U, chaque première et seconde aile (5, 6) est pourvue d'au moins un premier crochet intérieur (52, 62) proéminent à l'intérieur dudit U et destiné à bloquer ladite jambe d'ancrage (70) quand elle est insérée dans ledit U et un crochet extérieur (56, 66) proéminent à l'extérieur dudit U et destiné à bloquer ledit support (8) entre ledit crochet extérieur (56, 66) et ladite tête (2), **caractérisée en ce que** lesdits crochets intérieurs (52, 62) agencés sur chacune desdites ailes (5, 6) sont décalés l'un de l'autre dans le plan médian (A) dudit U et agencés pour, au repos, se chevaucher et traverser chacun ledit plan médian (A).

2. Agrafe de fixation (1) selon la revendication 1, **caractérisée en ce que** chaque première, seconde aile (5, 6) est pourvue d'une première extrémité (50, 60) solidaire de la base dudit U et d'une seconde extrémité (51, 61) librement flexible orientée vers ladite tête (2).

3. Agrafe de fixation (1) selon au moins la revendication 1, **caractérisée en ce que** ladite première aile (5) est pourvue d'un renfoncement (55) orienté vers ladite seconde aile (6), ladite seconde aile (6) est pourvue d'un renfoncement (65) orienté vers ladite première aile (5) et chaque renfoncement (55, 65) est prévu en regard respectivement dudit premier crochet intérieur (62, 52) de ladite autre aile (6, 5), pour recevoir ledit premier crochet intérieur (62, 52) de ladite autre aile (6, 5) lorsque lesdites première et seconde ailes (5, 6) sont déformées élastiquement l'une vers l'autre.

4. Agrafe de fixation (1) selon au moins la revendication 1, **caractérisée en ce que** ladite seconde aile (6) comporte un second crochet intérieur (62), **en ce que** ledit premier crochet intérieur (52) de ladite première aile (5) est disposé en regard de l'intervalle séparant lesdits premier et second crochets intérieurs (62) de ladite seconde aile (6) lorsque lesdites première et seconde ailes (5, 6) sont fléchies en étant éloignées dudit plan médian (A), et **en ce que** ledit premier crochet intérieur (52) de ladite première aile (5) au repos se trouve dans l'intervalle séparant lesdits premier et second crochets intérieurs (62) de ladite seconde aile (6).

5. Agrafe de fixation (1) selon au moins la revendication 1, **caractérisée en ce que** lesdits crochets extérieurs (56, 66) sont reliés à ladite première, seconde aile (5, 6) qui les portent par des surfaces de glissement extérieures (58, 68) inclinées de sorte à converger l'une vers l'autre en se rapprochant de la base dudit U, et **en ce que** lesdits premiers crochets intérieurs (52, 62) sont reliés à ladite première, seconde aile (5, 6) qui les porte par des surfaces de glissement intérieures (54, 64) inclinées de sorte à converger l'une vers l'autre en se rapprochant de la base dudit U.

6. Agrafe de fixation (1) selon au moins la revendication 1, **caractérisée en ce que** ladite tête (2) est formée par deux rebords (20), disjoints l'un de l'autre, s'étendant de part et d'autre des extrémité desdites branches (4) dudit U, chaque rebord (20) étant évidé en forme de C.

7. Agrafe de fixation (1) selon au moins la revendication 1, **caractérisée en ce que** la base dudit U est formée par deux traverses (41) séparées l'une de l'autre par un orifice de flexion (42) favorisant la flexion relative desdites branches (4).

8. Agrafe de fixation (1) selon au moins la revendication 1, **caractérisée en ce que** chaque premier crochet intérieur (52, 62) définit un épaulement (53, 63) orienté vers la base dudit U et formant avec le plan médian (A) dudit U, du coté de la base dudit U, un angle (α) supérieur à 90°.

9. Assemblage comprenant un panneau (7) pourvu d'une jambe d'ancrage (70) et un support (8) pourvu d'un orifice (80) assemblés au moyen d'une agrafe de fixation (1), **caractérisé en ce qu'**il comporte une agrafe de fixation (1) selon au moins la revendication 1, **en ce que** lesdites branches (4) dudit U sont en contact avec les bords dudit orifice (80) pour caler latéralement ladite agrafe de fixation (1) dans ledit orifice (80), **en ce que** ladite jambe d'ancrage (70) est bloquée dans ladite agrafe de fixation (1) par l'action simultanée desdits crochets intérieurs (52, 62), et **en ce que** ladite agrafe de fixation (1) est bloquée dans ledit orifice (80) par l'action simultanée desdits crochets extérieurs (56, 66).

## Patentansprüche

1. Befestigungsklammer (1), umfassend einen Kopf (2), der durch einen Hohlkörper (3) verlängert ist, der dazu bestimmt ist, in einer Öffnung (80) eines Trägers (8) angeordnet zu werden und ein Verankerungsbein (70) einer auf dem Träger (8) zu befestigenden Platte (7) aufzunehmen, wobei der Körper (3) erste und zweite elastisch verformbare Flügel (5, 6) umfasst, wobei der Körper (3) eine U-Form aufweist, deren Schenkel (4) sich beiderseits einer Mittelebene (A) erstrecken, wobei die Schenkel (4) Ausnehmungen (40) umfassen, die die ersten und zweiten Flügel (5, 6) aufnehmen, die geeignet sind, zur äußeren Kontur der Schenkel (4) zurückgesetzt zum Inneren des U hin verformt zu werden, wobei jeder erste und zweite Flügel (5, 6) mit mindestens einem Innenhaken (52, 62) versehen ist, der in das Innere des U hineinragt und dazu bestimmt ist, das Verankerungsbein (70) festzustellen, wenn es in das U eingesetzt wird, und mit einem Außenhaken (56, 66), der aus dem U herausragt und dazu bestimmt ist, den Träger (8) zwischen dem Außenhaken (56, 66) und dem Kopf (2) festzustellen, **dadurch gekennzeichnet, dass** die inneren Haken (52, 62), die auf jedem der Flügel (5, 6) angeordnet sind, zueinander in der Mittelebene (A) des U versetzt und eingerichtet sind, um in Ruheposition einander zu überlappen und jeweils die Mittelebene (A) zu durchqueren.

2. Befestigungsklammer (1) nach Anspruch 1, **dadurch gekennzeichnet, dass** jeder erste, zweite Flügel (5, 6) mit einem ersten Ende (50, 60), das mit der Basis des U verbunden ist, und mit einem zweiten frei biegsamen Ende (51, 61), das zum Kopf (2) gerichtet ist, versehen ist.

3. Befestigungsklammer (1) mindestens nach Anspruch 1, **dadurch gekennzeichnet, dass** der erste Flügel (5) mit einer Verstärkung (55) versehen ist, die zu dem zweiten Flügel (6) gerichtet ist, wobei der zweite Flügel (6) mit einer Verstärkung (65) versehen ist, die zu dem ersten Flügel (5) gerichtet ist, und jede Verstärkung (55, 65) jeweils gegenüber dem ersten Innenhaken (62, 52) des anderen Flügels (6, 5) vorgesehen ist, um den ersten Innenhaken (62, 52) des anderen Flügels (6, 5) aufzunehmen, wenn die ersten und zweiten Flügel (5, 6) elastisch zueinander verformt werden.

4. Befestigungsklammer (1) mindestens nach Anspruch 1, **dadurch gekennzeichnet, dass** der zweite Flügel (6) einen zweiten Innenhaken (62) umfasst, dass der erste Innenhaken (52) des ersten Flügels (5) gegenüber dem Abstand zwischen den ersten und zweiten Innenhaken (62) des zweiten Flügels (6) angeordnet ist, wenn der erste und zweite Flügel (5, 6) gebogen werden, wobei sie von der Mittelebene (A) entfernt werden, und dass sich der erste Innenhaken (52) des ersten Flügels (5) in Ruheposition in dem Abstand zwischen den ersten und zweiten Innenhaken (62) des zweiten Flügels (6) befindet.

5. Befestigungsklammer (1) mindestens nach Anspruch 1, **dadurch gekennzeichnet, dass** die Außenhaken (56, 66) mit dem ersten, zweiten Flügel (5, 6), die sie mit geneigten äußeren Gleitflächen (58, 68) tragen, verbunden sind, um zueinander zu konvergieren, wobei sie sich der Basis des U annähern, und dass die ersten Innenhaken (52, 62) mit dem ersten, zweiten Flügel (5, 6), die sie mit geneigten inneren Gleitflächen (54, 64) tragen, verbunden sind, um zueinander zu konvergieren, wobei sie sich der Basis des U annähern.

6. Befestigungsklammer (1) mindestens nach Anspruch 1, **dadurch gekennzeichnet, dass** der Kopf (2) von zwei Umrandungen (20), die voneinander getrennt sind, gebildet ist, die sich beiderseits der Enden der Schenkel (4) des U erstrecken, wobei jede Umrandung (20) C-förmig ausgenommen ist.

7. Befestigungsklammer (1) mindestens nach Anspruch 1, **dadurch gekennzeichnet, dass** die Basis des U von zwei Querträgern (41) gebildet ist, die durch eine Biegeöffnung (42), die die relative Biegung der Schenkel (4) begünstigt, voneinander getrennt sind.

8. Befestigungsklammer (1) mindestens nach Anspruch 1, **dadurch gekennzeichnet, dass** jeder erste Innenhaken (52, 62) einen Absatz (53, 63) definiert, der zur Basis des U gerichtet ist und mit der Mittelebene (A) des U auf der Seite der Basis des U einen Winkel (α) von über 90° bildet.

9. Anordnung, umfassend eine Platte (7), die mit einem Verankerungsbein (70) versehen ist, und einen Träger (8), der mit einer Öffnung (80) versehen ist, die mit Hilfe einer Befestigungsklammer (1) zusammengefügt sind, **dadurch gekennzeichnet, dass** sie eine Befestigungsklammer (1) mindestens nach Anspruch 1 umfasst, dass die Schenkel (4) des U mit den Rändern der Öffnung (80) in Kontakt sind, um die Befestigungsklammer (1) seitlich in der Öffnung (80) zu verkeilen, dass das Verankerungsbein (70) in der Befestigungsklammer (1) durch die gleichzeitige Wirkung der Innenhaken (52, 62) festgestellt wird, und dass die Befestigungsklammer (1) in der Öffnung (80) durch die gleichzeitige Wirkung der Außenhaken (56, 66) festgestellt wird.

## Claims

1. A fastener clip (1) having a head (2) extended by a hollow body (3) that is to be housed in an orifice (80) of a support (8) and that is to receive an anchor leg (70) of a panel (7) for fastening to said support (8), said body (3) having first and second elastically deformable flaps (5, 6), said body (3) presents a U-shape with branches (4) extend on either side of a median plan (A), said branches (4) including recesses (40) housing said first and second flaps (5, 6) that are suitable for being deformed away from the outline of said branches (4) towards the inside of said U-shape, each of the first and second flaps (5, 6) is provided with at least a first inside hook (52, 62) projecting into the inside of said U-shape for the purpose of locking said anchor leg (70) when inserted in said U-shape, and an outside hook (56, 66) projecting to the outside of said U-shape for the purpose of locking said support (8) between said outside hook (56, 66) and said head (2), the clip being **characterized in that** said inside hooks (52, 62) arranged on each said flaps (5, 6) are offset from each other in the midplane (A) of said U-shape and are arranged, at rest, to overlap, with each of them crossing said midplane (A).

2. A fastener clip (1) according to claim 1, **characterized in that** each of the first and second flaps (5, 6) is provided with a first end (50, 60) secured to the base of said U-shape, and with a freely flexible second end (51, 61) oriented towards said head (2).

3. A fastener clip (1) according at least to claim 1, **characterized in that** said first flap (5) is provided with a setback (55) facing towards said second flap (6), said second flap (6) is provided with a setback (65) facing towards said first flap (5) and each setback (55, 65) is provided in register respectively with said first inside hook (62, 52) of said other flap (6, 5) to receive said first inside hook (62, 52) of said other flap (6, 5) when said first and second flaps (5, 6) are elastically deformed towards each other.

4. A fastener clip (1) according at least to claim 1, **characterized in that** said second flap (6) includes a second inside hook (62), **in that** said first inside hook (52) of said first flap (5) is arranged facing the gap between said first and second inside hooks (62) of said second flap (6) when said first and second flaps (5, 6) are flexed away from said midplane (A), and **in that** said first inside hook (52) of said first flap (5) lies in the gap between said first and second inside hooks (62) of said second flap (6), when at rest.

5. A fastener clip (1) according at least to claim 1, **characterized in that** said outside hooks (56, 66) are connected to said first and second flaps (5, 6) that carry them by means of outside sliding surfaces (58, 68) that slope so as to converge towards each other on approaching the base of said U-shape, and **in that** said first inside hooks (52, 62) are connected to said first and second flaps (5, 6) that carry them via inside sliding surfaces (54, 64) that slope so as to converge towards each other on approaching the base of said U-shape.

6. A fastener clip (1) according at least to claim 1, **characterized in that** said head (2) is formed by two mutually disjoint rims (20) extending on either side of the ends of said branches (4) of said U-shape, each rim (20) having a C-shaped recess.

7. A fastener clip (1) according at least to claim 1, **characterized in that** the base of said U-shape is formed by two cross-members (41) separated from each other by a flexing orifice (42) encouraging relative flexing between said branches (4).

8. A fastener clip (1) according at least to claim 1, **characterized in that** each first inside hook (52, 62) defines a shoulder (53, 63) facing towards the base of said U-shape and forming an angle (α) with the midplane (A) of said U-shape beside the base of said U-shape, which angle (α) is greater than 90°.

9. An assembly comprising a panel (7) provided with an anchor leg (70) and a support (8) provided with an orifice (80), the panel and the support being assembled together by means of a fastener clip (1), the assembly being **characterized in that** it includes a fastener clip (1) according at least to claim 1, **in that** said branches (4) of the U-shape are in contact with the edges of said orifice (80) in order to hold said fastener clip (1) laterally in position in said orifice (80), **in that** said anchor leg (70) is locked in said fastener clip (1) by simultaneous action of said inside hooks (52, 62), and **in that** said fastener clip (1) is locked in said orifice (80) by simultaneous action of said outside hooks (56, 66).
